# EUROPÄISCHE PATENTANMELDUNG

(11) **EP 4 502 739 A1**
(43) Veröffentlichungstag der Anmeldung: **05.02.2025**
(21) Anmeldenummer: 23188703.5
(22) Anmeldetag: 31.07.2023
(51) Int. Cl.: G05B 19/042, G05B 9/02, G05B 23/02

(54) **VERFAHREN ZUM ÜBERPRÜFEN EINER FUNKTIONSTÜCHTIGKEIT EINER SCHALTUNGSANORDNUNG FÜR EINE STEUERUNG EINER MASCHINE MITTELS DER SCHALTUNGSANORDNUNG, COMPUTERPROGRAMMPRODUKT, COMPUTERLESBARES SPEICHERMEDIUM SOWIE SCHALTUNGSANORDNUNG**

(71) Anmelder: Siemens Aktiengesellschaft, 80333 München (DE)
(72) Erfinder: Fröhlich, Joachim, 85614 Kirchseeon (DE); Rothbauer, Stefan, 86156 Augsburg (DE); Stückjürgen, Christoph, 80807 München (DE); Zeller, Marc, 81243 München (DE)
(74) Vertreter: Siemens Patent Attorneys

(57) **Zusammenfassung**

Die Erfindung betrifft ein Verfahren zum Überprüfen einer Funktionstüchtigkeit einer Schaltungsanordnung (16) für eine Steuerung einer Maschine (12), mit den Schritten: Bereitstellen einer ersten elektronischen Recheneinrichtung (18) zum Erzeugen eines ersten Steuersignals (20) für die Maschine (12), wobei die erste elektronische Recheneinrichtung (18) zumindest einen ersten internen und einen zweiten externen Datensensor (22, 40) aufweist; Bereitstellen einer zweiten elektronischen Recheneinrichtung (28) zum Erzeugen eines zweiten Steuersignals (30) für die Maschine (12), wobei die zweite elektronische Recheneinrichtung (28) zumindest einen zweiten internen und einen ersten externen Datensensor (32, 38) aufweist; Erzeugen eines zweiten Aufforderung-Antwort-Verfahrens (54) für die erste elektronische Recheneinrichtung (18) und/oder eines ersten Aufforderung-Antwort-Verfahrens (56) für die zweite elektronische Recheneinrichtung (18); Auswerten des zweiten Aufforderung-Antwort-Verfahrens (54) und/oder Auswerten des ersten Aufforderung-Antwort-Verfahrens (56); und Überprüfen der Funktionstüchtigkeit in Abhängigkeit von der Auswertung. Ferner betrifft die Erfindung ein Computerprogrammprodukt, ein computerlesbares Speichermedium sowie eine Schaltungsanordnung (16).

## Beschreibung

Die Erfindung betrifft ein Verfahren zum Überprüfen einer Funktionstüchtigkeit einer Schaltungsanordnung für eine Steuerung einer Maschine mittels der Schaltungsanordnung gemäß dem geltenden Patentanspruch 1. Ferner betrifft die Erfindung ein Computerprogrammprodukt, ein computerlesbares Speichermedium sowie eine Schaltungsanordnung.

Um sicherheitskritische Automatisierungsaufgaben auszuführen, die eine kontinuierliche Überwachung und Steuerung erfordern, muss eine Automatisierungssoftware zuverlässig ausgeführt werden. Es muss jederzeit gewährleistet sein, dass in einem Fehlerfall ein sicherer Systemzustand erreicht werden kann, zum Beispiel ein Notstopp einer Maschine oder ein Wiederanlaufpunkt ohne Unterbrechung des gesteuerten Prozesses. Auch wird zu diesem Zweck in der Regel dedizierte Hardware, zum Beispiel ein ausfallsicheres SPS, und Software für fehlertolerante Systeme verwendet. Aus Sicherheitsgründen können sicherheitskritische Automatisierungsaufgaben im Stand der Technik nicht auf handelsüblicher Standardhardware ausgeführt werden.

Aufgabe der vorliegenden Erfindung ist es, ein Verfahren, ein Computerprogrammprodukt, ein computerlesbares Speichermedium sowie eine Schaltungsanordnung zu schaffen, mittels welcher eine Funktionsüberprüfung für die Schaltungsanordnung realisiert werden kann.

Diese Aufgabe wird durch ein Verfahren, ein Computerprogrammprodukt, ein computerlesbares Speichermedium sowie durch eine Schaltungsanordnung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Überprüfen einer Funktionstüchtigkeit einer Schaltungsanordnung für eine Steuerung einer Maschine mittels der Schaltungsanordnung. Es wird eine erste elektronische Recheneinrichtung der Schaltungsanordnung zum Erzeugen eines ersten Steuersignals für die Maschine bereitgestellt, wobei die erste elektronische Recheneinrichtung zumindest einen ersten internen und einen externen zweiten Datensensor aufweist. Es wird eine zweite elektronische Recheneinrichtung, welche insbesondere separat zur ersten elektronischen Recheneinrichtung ausgebildet ist, der Schaltungsanordnung zum Erzeugen eines zweiten Steuersignals für die Maschine bereitgestellt, wobei die zweite elektronische Recheneinrichtung zumindest einen zweiten internen und einen ersten externen Datensensor aufweist. Es wird ein zweites Aufforderung-Antwort-Verfahren für die erste elektronische Recheneinrichtung mittels eines der Datensensoren erzeugt und/oder es wird ein erstes Aufforderung-Antwort-Verfahren für die zweite elektronische Recheneinrichtung mittels eines der Datensensoren erzeugt. Es erfolgt ein Auswerten des zweiten Aufforderung-Antwort-Verfahrens mittels eines der Datensensoren und/oder ein Auswerten des ersten Aufforderung-Antwort-Verfahrens mittels eines der Datensensoren. Die Funktionstüchtigkeit wird wiederum durch die Auswertung überprüft.

Bei dem Aufforderung-Antwort-Verfahren handelt es sich insbesondere um ein sogenanntes Challenge-Response-Verfahren. Hierbei handelt es sich insbesondere um ein entsprechendes Authentifizierungsverfahren eines Teilnehmers auf Basis von Wissen. Hierbei stellt ein Teilnehmer eine Aufgabe, die der andere lösen muss, um zu beweisen, dass er eine bestimmte Information kennt, ohne diese Information selber zu übertragen.

Insbesondere ermöglicht dies die Nutzung von nichtzertifizierten Plattformen und Standardhardware, insbesondere sogenannte Standard Industrie Hardware, zur Ausführung von sicherheitsrelevanten Funktionen. Dabei kann eine günstige Lösung im Vergleich zur zertifizierten Plattform geschaffen werden. Homogen-redundante Komponenten auf zwei elektronischen Recheneinrichtungen erzeugen dabei keine zusätzlichen Entwicklungskosten. Zusätzliche Kosten entstehen lediglich für eine entsprechende redundante Hardware. Insbesondere die erste elektronische Rechen Einrichtung und die zweite elektronische Recheneinrichtung gleich, jedoch separat zueinander, ausgebildet. Ferner sind wenige Randbedingungen an die Anwendung, etwa die zeitliche Anforderung an das Herbeiführen einer sicheren Systemreaktion bei erkannten Fehlern, vorhanden, insbesondere im Vergleich zu zertifizierten Plattformen zur Ausführung sicherheitsrelevanter Systemfunktionen. Durch insbesondere ein zugehöriges kreuzweise Deployment der Datensensoren sind umfassende Tests der Schaltungsanordnung möglich. Diese Tests umfassen Daten des gesteuerten Prozesses, von Zuständen externen Datensensoren, von internen Datensensoren, und der elektronischen Recheneinrichtungen selbst.

Dadurch können insbesondere sicherheitsrelevante Steuerungsfunktionen auch auf handelsüblicher Standardhardware (COTS - Components-off-the-shelf), insbesondere Standard Industrie Hardware, ausgeführt werden können.

Insbesondere ermöglicht somit die Schaltungsanordnung die Nutzung hochverfügbarer und/oder sicherheitskritischer Steuerungssysteme. Eine Besonderheit dieses Ansatzes ist es dabei, dass keine dedizierte Spezialhardware für eine ausfallsichere SPS benötigt wird (Speicherprogrammierbare Steuerung). Vielmehr kann Standard Industrie Hardware als elektronische Recheneinrichtung für die Ausführung sicherheitsrelevanter Steuerungsfunktionen verwendet werden, die entsprechend aufgerüstet werden, ohne dass die Steuerungsfunktion, geschweige denn das enthaltene Steuerungssystem, angehalten werden muss.

Zu diesem Zweck wird beispielsweise eine Steuerungsfunktion von zwei, insbesondere analogen, Steuerungsfunktionsinstanzen, die auf jeweiligen Rechenknoten/elektronische Recheneinrichtungen eingesetzt und ausgeführt werden, eingesetzt und ausgeführt. Da es sich um zwei Instanzen einer Steuerungsfunktion handelt, verhalten sich die beiden elektronischen Recheneinrichtungen identisch, wenn alles andere unverändert bleibt.

Für die Implementierung der Rechenknoten beziehungsweise der elektronischen Recheneinrichtung können zwei vergleichsweise günstige Standard Industrie Hardware mit handelsüblicher und Software verwendet werden. Externe Datensensoren sind mit internen Datensensoren und insbesondere auch mit den entsprechenden elektronischen Recheneinrichtungen verschränkt. Diese Datensensoren bilden das Rückgrat der Schaltungsanordnung mit zwei redundanten Sicherheitsverbindungen zur Steuerung der Sicherheitseinrichtung. Die Schaltungsanordnung erkennt und behandelt ausfallende oder fehlerhafte Prozesse, Prozesskommunikationsverbindungen und Rechenknoten.

Die Schaltungsanordnung ist dabei insbesondere voll funktionsfähig, um den Lebenszyklus der sicherheitsrelevanten Steuerungsinstanz vollständig abzudecken, einschließlich von Upgrades und Downgrades der Steuerungsfunktion mit internen Datensensoren und der externen Datensensoren. Im Normalfall überdauert die Schaltungsanordnung die Steuerungsfunktionsinstanzen, das heißt die Schaltungsanordnung vor und nach den Steuerungsfunktionsinstanzen ist bevorzugt weiterhin betriebsbereit.

Insbesondere ist somit vorgesehen, dass sicherheitsrelevante Steuerungsfunktionen durch die Ausführung mittels hochverfügbarer preiswerter Hardware, zum Beispiel industrieller Standardhardware, statt auf dedizierter, vergleichsweise teurer Hardware, wie zum Beispiel einer ausfallsicheren SPS, durchgeführt werden können. Ferner sind die SPS schwer zu erhalten, wodurch eine schnellere Bereitstellung der Schaltungsanordnung realisiert werden kann. Die redundanten externen Datensensoren, die in getrennten Prozessen auf redundanter industrieller Standardhardware laufen, die sich von der Hardware unterscheidet, auf der die überwachte, sicherheitsrelevante Steuerungsfunktion läuft, implementieren somit ein unabhängiges Netz auf kosteneffiziente Weise.

Ferner ermöglicht die Schaltungsanordnung ein nahtloses Upgrade von hochverfügbaren, sicherheitsrelevanten Steuerungsfunktionen auf industrieller Standardhardware. Insbesondere ermöglicht somit die Erfindung die nahtlose Aufrüstung von hochverfügbaren, sicherheitsrelevanten Steuerungsfunktionen. Es können parallele Substitutionen, insbesondere Upgrades oder Downgrades, von redundanten Steuerungsfunktionsinstanzen auf den zwei elektronischen Recheneinrichtungen durchgeführt werden. Insbesondere ist sichergestellt, dass zu jeder Zeit, auch während einer Aktualisierung von Steuerungsfunktionen im laufenden Betrieb, eine sichere Systemreaktion gewährleistet werden kann.

Insbesondere ist somit ein wesentlicher Teil der Erfindung der sogenannten Challenge-Response-Mechanismus zur kontinuierlichen Sicherung der Integrität der elektronischen Recheneinrichtungen, insbesondere ausgelegt für die sicherheitsrelevanten Steuerungsfunktionen für die Maschine, inklusive der Ausführungsumgebung, mit anderen Worten der Schaltungsanordnung selbst, das heißt auch inklusive der Verwaltung der Betriebsmittel, beispielsweise die Ressourcen, die für die korrekte und rechtzeitige Ausführung der sicherheitsrelevanten Funktionen notwendig sind. Im Speziellen umfasst das auch den redundant ausgelegten Steuerungsmechanismus aus insbesondere externen Datensensoren und internen Datensensoren.

Durch den Challenge-Response-Mechanismus wird die Integrität der elektronischen Recheneinrichtung inklusive Betriebsmittelverwaltung der Steuerungsfunktionen sowie der elektronischen Recheneinrichtung selbst im laufenden Betrieb gegenüber zufälligen Fehlern der Hardware wirksam abgesichert.

Um eine entsprechende Challenge-Response zu ermöglichen, müssen wiederum die elektronischen Recheneinrichtungen in der Lage sein, die gestellten Aufgaben zu lösen. Insbesondere steht eine geeignete Umgebung zur Verfügung zur Ausführung von mehreren Prozessen für die Instanzen der Steuerungsfunktionen und der Datensensoren. Des Weiteren muss eine korrekte Kommunikation zwischen beispielsweise internen Datensensoren und externen Datensensoren über verschiedene Kommunikationsverbindungen hergestellt sein. Des Weiteren muss auch eine korrekte Kommunikation zwischen beispielsweise den externen Datensensoren vorliegen. Es muss eine erfolgreiche Prüfung der Steuerungsfunktion mittels der internen und externen Datensensoren durchgeführt werden. Ferner muss auch eine erfolgreiche Selbstprüfung der Datensensoren realisiert werden.

Insbesondere sind somit die externen Datensensoren redundant auf den separaten elektronischen Recheneinrichtungen ausgebildet. Beispielsweise weist die erste elektronische Recheneinrichtung den externen zweiten Datensensor auf und die zweite elektronische Recheneinrichtung weist den externen ersten Datensensor auf. Somit ist es ermöglicht, dass über die externen Datensensoren eine entsprechende Überprüfung stattfinden kann, wobei auch bei beispielsweise einer fehlerhaften elektronischen Recheneinrichtung weiterhin über die externen Datensensoren eine Überprüfung und Steuerung durchgeführt werden kann. Ferner weisen somit die elektronischen Recheneinrichtungen zusätzlich interne Datensensoren auf. Bevorzugt können die elektronischen Recheneinrichtungen auch die externen Datensensoren aufweisen. Die Datensensoren wiederum sind insbesondere miteinander kreuzverbunden und können ihre Daten entsprechend austauschen. Es ist nun vorgesehen, dass beispielsweise ein externer Datensensor wiederum die Challenge-Response ausruft um beispielsweise die anderen Datensensoren sowie die entsprechenden Steuerungsfunktionen zu überprüfen.

Gemäß einer vorteilhaften Ausgestaltungsform wird ein jeweiliger Datensensor zum Überwachen von zumindest einem anderen der Datensensoren mittels eines Aufforderung-Antwort-Verfahrens bereitgestellt wird. Mit anderen Worten ist vorgesehen, dass die Datensensoren sich selbst mittels der Challenge-Response überprüfen können. Jeder der Datensensoren ist dabei in der Lage die anderen Datensensoren entsprechend zu überprüfen. Dadurch kann äußerst zuverlässig die Schaltungsanordnung betrieben werden.

Eine weitere vorteilhafte Ausgestaltungsform sieht vor, die jeweiligen Datensensoren unabhängig voneinander eine Überwachung durchführen. Neben der zeitlichen Überwachung können somit Daten aus "unabhängigen Bereichen" durch "unabhängige Einheiten" erfasst werden und es ist somit damit unwahrscheinlich, dass bei Fehlern in einer der beteiligten Einheiten ein korrektes Ergebnis erhalten werden kann.

Ebenfalls vorteilhaft ist, wenn bei der Auswertung eine Korrektheit eines Ergebnisses des Aufforderung-Antwort-Verfahrens überprüft wird. Beispielsweise weiß der Datensensor, welcher die Aufforderung-Antwort-Verfahren initiiert, welche Ergebnisse vorzuliegen haben. Es wird dann das entsprechende Aufforderung-Antwort-Verfahren an die externen Teilnehmer, beispielsweise die anderen Datensensoren sowie die Steuerungsfunktionen übermittelt. Der initiierende Datensensor empfängt wiederum die Ergebnisse des Aufforderung-Antwort-Verfahrens und kann überprüfen, ob das Ergebnis korrekt ist. Somit kann die Funktionstüchtigkeit der Schaltungsanordnung zuverlässig überprüft werden.

Eine weitere vorteilhafte Ausgestaltungsform sieht vor, dass bei der Auswertung eine Zeitdauer für eine Auswertung des Aufforderung-Antwort-Verfahrens überprüft wird. Beispielsweise kann der Datensensor, welcher das Aufforderung-Antwort-Verfahren initiiert, entsprechende Zeitvorgaben, beispielsweise abhängig vom Systemtakt, ausrufen. Sollte ein Ergebnis beziehungsweise die Auswertung nicht innerhalb des vorgegebenen Zeitraums beziehungsweise innerhalb der vorgegebenen Zeitdauer erfolgen, so kann auch von einem Fehler ausgegangen werden. Somit kann auch in Abhängigkeit von der Zeitdauer die entsprechende Funktionstüchtigkeit überprüft werden.

Es hat sich weiterhin als vorteilhaft erwiesen, wenn ein Aufforderung-Antwort-Verfahren aus einer Vielzahl von potentiellen Aufforderung-Antwort-Verfahren ausgewählt wird. Insbesondere kann der Datensensor, welcher das Aufforderung-Antwort-Verfahren initiiert, zumindest eine aus einer Vielzahl von potentiellen Aufforderung-Antwort-Verfahren auswählen. Insbesondere ist dabei von Bedeutung, sollte beispielsweise ein Aufforderung-Antwort-Verfahren ausgewählt werden, dass dies zumindest in naher Zukunft nicht nochmals verwendet wird. Somit können unterschiedliche Aufforderung-Antwort-Verfahren genutzt werden, wodurch zuverlässig auf die Funktionstüchtigkeit der Schaltungsanordnung geschlossen werden kann.

Es hat sich weiterhin als vorteilhaft erwiesen, wenn in Abhängigkeit von einem Ergebnis der Auswertung eine Sicherheitseinrichtung der Schaltungsanordnung angesteuert wird. Sollte beispielsweise das Ergebnis der Auswertung einen Fehler aufweisen, so kann die Schaltungsanordnung eine Sicherheitsanordnung ansteuern, sodass beispielsweise die Maschine in einen Notbetrieb beziehungsweise ein Not-Aus geht. Somit kann die Maschine zuverlässig auch in sicherheitskritischer Umgebung betrieben werden.

Ebenfalls vorteilhaft ist, wenn in Abhängigkeit von einem Ergebnis der Auswertung ein erneutes Aufforderung-Antwort-Verfahren durchgeführt wird. Sollte beispielsweise ein Fehler im ersten Aufforderung-Antwort-Verfahren zu verzeichnen sein, so kann ein nochmaliges, darauffolgendes Aufforderung-Antwort-Verfahren durchgeführt werden, um beispielsweise den Fehler zu verifizieren. Sollte im zweiten Aufforderung-Antwort-Verfahren ebenfalls ein Fehler zu verzeichnen sein, so kann von einem Fehler im System ausgegangen werden und beispielsweise eine Notsteuerung der Maschine initiiert werden.

Ferner hat es sich als vorteilhaft erwiesen, wenn in vorgegebenen Zeitabständen ein Aufforderung-Antwort-Verfahren durchgeführt wird. Insbesondere kann somit in kontinuierlichen Zeitabständen ein Aufforderung-Antwort-Verfahren durchgeführt werden. Insbesondere kann dies im laufenden Betrieb der Maschine durchgeführt werden. Dies hat den Vorteil, dass die Funktionstüchtigkeit im laufenden Betrieb kontinuierlich überwacht werden kann.

Eine weitere vorteilhafte Ausgestaltungsform sieht vor, dass die erste elektronische Recheneinrichtung als primäre Steuerungseinrichtung für die Maschine bereitgestellt wird. Die zweite elektronische Recheneinrichtung kann beispielsweise als eine redundante elektronische Recheneinrichtung bereitgestellt werden. Mit anderen Worten, sollte beispielsweise kein Fehler vorliegen, so wird mittels des Steuersignals der ersten elektronischen Recheneinrichtung die Maschine gesteuert. Sollte wiederum ein Fehler vorliegen, beispielsweise bei der ersten elektronischen Recheneinrichtung, so kann die Maschine redundant über die zweite elektronische Recheneinrichtung geschaltet werden. Somit kann auch im sicherheitsrelevanten Bereich die Maschine zuverlässig betrieben werden.

Ebenfalls vorteilhaft ist, wenn eine Notsteuerung für die Maschine mittels einer der Datensensoren in Abhängigkeit von einem Ereignis durchgeführt wird. Sollte beispielsweise ein Fehler entdeckt werden als Ereignis, so kann die Notsteuerung, beispielsweise das Ansteuern der Sicherheitseinrichtung, entsprechend durchgeführt werden, wodurch beispielsweise die Maschine in einen sicheren Zustand gebracht werden kann. Somit kann auch in sicherheitskritischen Bereichen die Maschine zuverlässig betrieben werden.

Ebenfalls vorteilhaft ist, wenn eine Kommunikation zwischen zumindest dem ersten Datensensor und dem zweiten Datensensor mittels einer Kommunikationsverbindung durchgeführt wird. Insbesondere sind die jeweiligen Datensensoren miteinander kommunikativ verbunden. Diese können Daten austauschen, wodurch der jeweilige Systemzustand allen Datensensoren zur Verfügung steht. Auf Basis dessen kann eine redundante Steuerung für die Maschine bereitgestellt werden, sodass die Maschine auch in sicherheitskritischen Umgebungen betrieben werden kann.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung veranlassen, wenn die Programmcodemittel von der elektronischen Recheneinrichtung abgearbeitet werden, ein Verfahren nach dem vorhergehenden Aspekt durchzuführen.

Ferner betrifft die Erfindung auch ein computerlesbares Speichermedium mit einem Computerprogrammprodukt nach dem vorhergehenden Aspekt.

Ein nochmals weiterer Aspekt der Erfindung betrifft eine Schaltungsanordnung zum Überprüfen einer Funktionstüchtigkeit der Schaltungsanordnung und für eine Steuerung der Maschine, mit zumindest einer ersten elektronischen Recheneinrichtung und einer zweiten elektronischen Recheneinrichtung, wobei die Schaltungsanordnung zum Durchführen eines Verfahrens nach dem vorhergehenden Aspekt ausgebildet ist. Insbesondere wird das Verfahren mittels der Schaltungsanordnung durchgeführt.

Vorteilhafte Ausgestaltungsformen des Verfahrens sind als vorteilhafte Ausgestaltungsformen des Computerprogrammprodukts, des computerlesbaren Speichermediums sowie der Schaltungsanordnung anzusehen. Die Schaltungsanordnung weist hierzu insbesondere gegenständliche Merkmale auf, um entsprechende Verfahrensschritte durchführen zu können.

Ebenfalls betrifft die Erfindung noch ein Maschinensystem mit einer Schaltungsanordnung nach dem vorhergehenden Aspekt und mit einer Maschine.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

### Dabei zeigen:

- FIG 1: ein schematisches Blockschaltbild gemäß einer Ausführungsform einer Schaltungsanordnung mit einer Maschine; und
- FIG 2: ein schematisches Ablaufdiagramm gemäß einer Ausführungsform des Verfahrens.

In den Figuren sind gleiche und funktionsgleiche Elemente mit gleichen Bezugszeichen versehen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

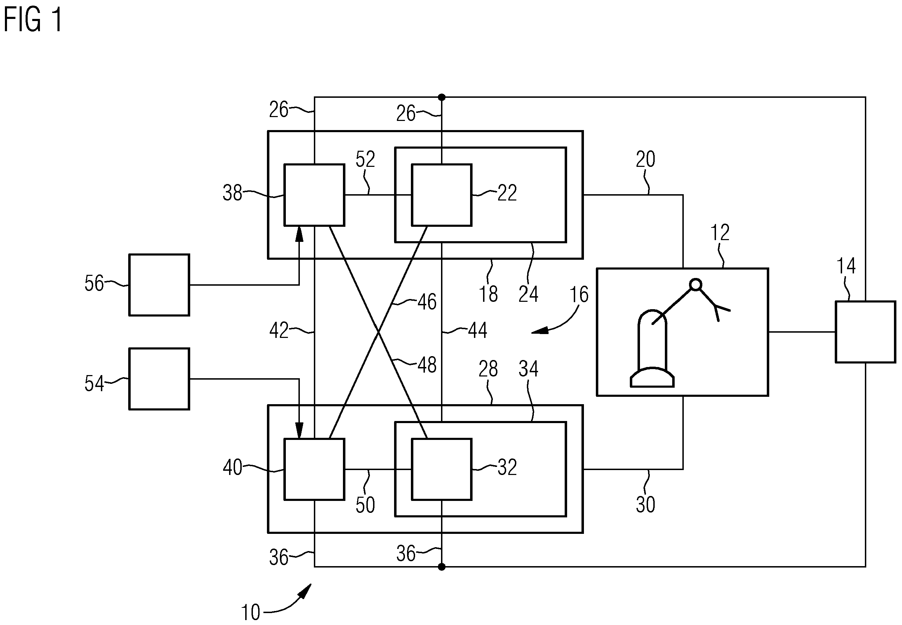

FIG 1 zeigt ein schematisches Blockschaltbild einer Ausführungsform eines Maschinensystems 10. Das Maschinensystem 10 weist zumindest eine Maschine 12, eine Sicherheitseinrichtung 14 sowie eine Schaltungsanordnung 16 auf.

Die Schaltungsanordnung 16 ist für eine Steuerung der Maschine 12 ausgebildet. Die Schaltungsanordnung 16 weist zumindest eine erste elektronische Recheneinrichtung 18 zum Erzeugen von einem ersten Steuersignal 20 für die Maschine 12 auf. Die erste elektronische Recheneinrichtung 18 weist einen internen ersten Datensensor 22, insbesondere für eine erste Steuerungsfunktion 24 zum Erzeugen des Steuersignals 20, auf. Ferner ist der erste interne Datensensor 22 zum Erzeugen eines ersten Sicherheitssignals 26 für die Sicherheitseinrichtung 14 ausgebildet.

Es ist vorgesehen, dass die Schaltungsanordnung 16 eine zweite elektronische Recheneinrichtung 28 aufweist, welche zum Erzeugen von einem zweiten Steuersignal 30 für die Maschine 12 ausgebildet ist, wobei die zweite elektronische Recheneinrichtung 28 einen internen zweiten Datensensor 32, insbesondere für eine zweite Steuerungsfunktion 34, und zum Erzeugen eines zweiten Sicherheitssignals 36 für die Sicherheitseinrichtung 14 aufweist, wobei die erste elektronische Recheneinrichtung 18 einen externen zweiten Datensensor 38 aufweist, welcher mit dem internen zweiten Datensensor 32 gekoppelt ist und wobei die zweite elektronische Recheneinrichtung 28 einen externen ersten Datensensor 40 aufweist, welcher mit dem internen ersten Datensensor 22 gekoppelt ist, und wobei ein jeweiliges Sicherheitssignal 26, 36 zusätzlich von dem externen ersten Datensensor 40 und/oder dem externen zweiten Datensensor 38 erzeugbar ist.

Insbesondere zeigt somit die FIG 1 ebenfalls, dass der erste externe Datensensor 40 und der externe zweite Datensensor 38 über eine Kommunikationsverbindung 42 miteinander gekoppelt sind. Des Weiteren kann die erste elektronische Recheneinrichtung 18 und die zweite elektronische Recheneinrichtung 28 über eine weitere Kommunikationsverbindung 44 miteinander gekoppelt sein. Ferner zeigt die FIG 1, dass der externe zweite Datensensor 38 über einen ersten Kommunikationslink 46 mit dem internen zweiten Datensensor 32 gekoppelt ist und der externe erste Datensensor 40 mit dem internen ersten Datensensor 22 über einen weiteren Kommunikationslink 48 gekoppelt ist. Ferner sind Verbindungen 50 und 52 gezeigt, welche die jeweiligen internen Datensensoren 22, 32 mit den externen Datensensoren 38, 40 verbinden.

Im folgenden Ausführungsbeispiel kann insbesondere vorgesehen sein, dass die erste elektronische Recheneinrichtung 18 als primäre Steuerungseinrichtung für die Maschine 12 ausgebildet ist.

Der interne erste Datensensor 22 ist dabei insbesondere zum Überwachen des Betriebs der ersten elektronischen Recheneinrichtung 18 ausgebildet und/oder der interne zweite Datensensor 32 ist zum Überwachen des Betriebs der zweiten elektronischen Recheneinrichtung 28 ausgebildet. Des Weiteren kann der externe zweite Datensensor 38 zum Überwachen des Betriebs der ersten elektronischen Recheneinrichtung 18 ausgebildet sein und/oder der externe erste Datensensor 40 zum Überwachen des Betriebs der zweiten elektronischen Recheneinrichtung 28 ausgebildet sein.

Ferner kann vorgesehen sein, dass die Datensensoren 22, 32, 38, 40 zum Durchführen eines Testprogramms für die erste elektronische Recheneinrichtung 18 und/oder die zweite elektronische Recheneinrichtung 28 ausgebildet sind.

Insbesondere zeigt somit die FIG 1, dass eine Steuerungsfunktion 24, 34 jeweils von der ersten elektronischen Recheneinrichtung 18 und/oder von der zweiten elektronischen Recheneinrichtung 28 eingesetzt und ausgeführt werden. Da es sich dabei um zwei Instanzen der Steuerungsfunktion 24, 34 handelt, verhalten sich die erste elektronische Recheneinrichtung 18 und die zweite elektronische Recheneinrichtung 28 im Wesentlichen identisch, wenn alles andere unverändert bleibt.

Dabei kann beispielsweise die erste elektronische Recheneinrichtung 18 als primäre Kontrollinstanz ausgebildet sein. Die primäre Kontrollinstanz steuert dabei die Umgebung der Steuerungsfunktionen 24, 34 über eine entsprechende Aktorverbindung, die aktiv ist, zur Maschine. Die sekundäre Kontrollinstanz, vorliegend insbesondere die zweite elektronische Recheneinrichtung 28, ist dabei inaktiv. Es kann jeweils nur die jeweilige Verbindung des Primärteils aktiv sein. Unter speziellen Konditionen kann die entsprechende Verbindung des Primärbauteils inaktiv werden.

Für die Implementierung der elektronischen Recheneinrichtungen 18, 28 können zwei vergleichsweise günstige Standard Industrie Hardware mit handelsüblicher Hardware und Software verwendet werden.

Die externen Datensensoren 38, 40 sind mit den jeweiligen internen Datensensoren 22, 32 verschränkt. Diese Datensensoren 22, 32, 38, 40 bilden wiederum das sogenannte Rückgrat eines verteilten Sicherheitsmonitors, wie dies insbesondere der Schaltungsanordnung 16 entspricht, mit den zwei redundanten Notverbindungen zur Sicherheitseinrichtung 14.

Die Schaltungsanordnung 16 erkennt und behandelt ein Ausfallen oder fehlerhafte Prozesse, Prozesskommunikationsverbindungen und Rechenknoten. Die Schaltungsanordnung 16 weist dabei redundante und unabhängige interne Datensensoren 22, 32 auf, die insbesondere in den elektronischen Recheneinrichtungen 18, 28 eingebaut sind und dort ausgeführt werden. Ferner weist die Schaltungsanordnung 16 redundante und unabhängige externe Datensensoren 38, 40 auf, die als separate, autonome, reine Sensorprozesse ausgeführt werden. Ferner können beispielsweise der externen zweite Datensensor 38 mit dem internen ersten Datensensor 22, und der externe erste Datensensor 40 mit dem internen zweiten Datensensor 32 verschränkt sein, insbesondere lateral, also auf derselben elektronischen Recheneinrichtung 18, 28 sowie auch zwischen den verschiedenen unabhängigen elektronischen Recheneinrichtungen 18, 28. Die Datensensoren 22, 32, 38, 40 sind dabei insbesondere derart miteinander verschränkt, um deren Überwachungsfunktion auszutauschen und sich gegenseitig zu überwachen, zum Beispiel um die Verfügbarkeit und den Gesundheitszustand des Peers zu überwachen und zu vergleichen, ähnlich wie auch die elektronischen Recheneinrichtungen 18, 28 sich gegenseitig überwachen. Ferner sind die entsprechenden Notverbindungen zur Sicherheitseinrichtung 14 vorgesehen.

Die internen Datensensoren 22, 32 überwachen den Betrieb der elektronischen Recheneinrichtungen 18, 28, indem sie Datenelemente, die sich auf die Steuerungsfunktionsinstanzen oder ihre Betriebsmittel beziehen, überwachen und von Fall zu Fall ändern. Die internen Datensensoren 22, 32 implementieren dabei insbesondere Testprogramme. Ferner können auch die externen Datensensoren 38, 40 Testprogramme implementieren, jedoch in dedizierten, unabhängigen Überwachungsprozessen auf verschiedenen elektronischen Recheneinrichtungen 18, 28. Der externe erste Datensensor 40 überwacht dabei wiederum die erste Steuerungsfunktion 24 und der externe zweite Datensensor 38 überwacht die zweite Steuerungsfunktion 34. Diese Überwachung erfolgt wiederum über die entsprechenden internen Datensensoren 22, 32. Mit anderen Worten erfolgt die Überwachung der ersten Steuerungsfunktion 24 mittels des externen ersten Datensensors 40 über den ersten internen Datensensor 22 und die Überwachung der zweiten Steuerungsfunktion 34 erfolgt wiederum mittels des externen ersten Datensensors 38 über den internen zweiten Datensensor 32.

Die externen Datensensoren 38, 40 vergleichen wiederum ihre Systemsichten, um beispielsweise bei Systeminkonsistenzen oder Komponentenausfällen durch ausfallende Datensensoren 22, 32, 38, 40 zu erkennen und entsprechende Gegenmaßnahmen einzuleiten. Im Falle eines drohenden Schadens, wenn beispielsweise die primäre Steuerungsfunktion nicht ordnungsgemäß reagiert, kann die Schaltungsanordnung 16 versuchen, auf die sekundäre Steuerungsfunktion, mit anderen Worten auf die zweite elektronische Recheneinrichtung 28, umzuschalten, oder als letztes Mittel auch die Sicherheitseinrichtung 14 anzusteuern, und beispielsweise einen Notstopp initiieren.

Die Schaltungsanordnung 16 muss dabei insbesondere voll funktionsfähig sein, um den Lebenszyklus der sicherheitsrelevanten Steuerungsinstanz vollständig abzudecken, einschließlich entsprechender Upgrades und Downgrades. Im Normalfall überdauert die Schaltungsanordnung 16 die Steuerungsfunktionsinstanzen, das heißt die Schaltungsanordnung 16 ist vor und nach den Steuerungsfunktionsinstanzen betriebsbereit. Dies kann beispielsweise nachfolgend für Startsequenzen veranschaulicht werden.

Die Startsequenz einer einfach abgedeckten Steuerungsfunktion 24, 34, das heißt einer Steuerungsfunktion 24 mit der ersten elektronischen Recheneinrichtung 18, ist, dass der externe erste Datensensor 40 mit aktivierter Notverbindung zuerst gestartet wird. Dann startet der interne erste Datensensor 32 bei aktiver Notverbindung und bei aktivierter seitlicher Sensor-Datenverbindung, mit anderen Worten den Verbindungen 52 und 48. Der interne erste Datensensor 22 meldet sich dann bei dem bereits laufenden externen zweiten Datensensor 40 an. Die Systemsteuerungslogik in der ersten Steuerungsfunktion 24 startet nun mit aktivierter weiterer Kommunikationsverbindung 44 zwischen den beiden elektronischen Recheneinrichtung 18 und 28.

Die Startsequenz einer doppelt abgedeckten, redundanten Steuerungsfunktion, das heißt einer Steuerungsfunktion mit zwei Steuerungsfunktionsinstanzen ist wie folgt: Die beiden externen Datensensoren 38, 40 werden mit der entsprechenden Notfunktion gestartet. Im Anschluss daran erfolgt das Starten der internen Datensensoren 22, 32 sowie deren entsprechenden Verbindungen. Die internen Datensensoren 22, 32 melden sich bei den bereits externen Datensensoren 38, 40 an. Die Systemsteuerungslogik beginnt, insbesondere aktiv die erste Steuerungsfunktion 24 auf die Maschine 12 anzuwenden. Die Notfallverbindungen von den Datensensoren 22, 32, 38, 40, die direkt der primären Kontrollinstanz zugeordnet sind, werden aktiviert.

In jedem Systemzyklus müssen die kritischen Daten, die in redundanten Steuerungsinstanzen abgefragt werden, das heißt die Daten, die in Probepunkten gekapselt sind, das heißt die Daten, die in den Datensensoren 22, 32, 38, 40 gekapselt sind und von den Datensensoren 22, 32, 38, 40 in jedem Systemzyklus überprüft und verglichen werden, gleich sein. Wenn kritische Daten nach einer bestimmten Zeit, die von dem Steuerungssystem, der Steuerungsfunktion 24, 34 und der sich ändernden Systemumgebung abhängt, nicht übereinstimmen, dann betätigt einer der Datensensoren 22, 32, 38, 40 beispielsweise die Sicherheitseinrichtung 14 in dieser Reihenfolge: Primärer Datensensor vor sekundärer Datensensor, interner Datensensor 22, 32 vor externem Datensensor 38, 40. Im Falle eines Problems der Schaltungsanordnung 16 kann die Steuerungsfunktion anhalten oder in einen verschlechterten Betriebsmodus übergehen.

Bei dem in der FIG 1 dargestellten Aufbau wird ein einzelner Fehlerpunkt wie folgt behandelt. Sollte beispielsweise die zweite Steuerungsfunktion 34 ausfallen, läuft immer noch die erste Steuerungsfunktion 24, einschließlich des internen ersten Datensensors 22 und des externen ersten Datensensors 40.

Fällt die zweite elektronische Recheneinrichtung 28 mit der zweiten Steuerungsfunktion 34 und dem externen ersten Datensensor 40 aus, so läuft noch die erste elektronische Recheneinrichtung 18 mit der ersten Steuerungsfunktion 24. Der sekundäre, im Bereitschaftszustand befindliche externe zweite Datensensor 38 wird zuvor zum primären externen Datensensor.

Wenn die primäre Steuerungsfunktion 24 ausfällt, wird insbesondere im Hot-Stand by-Modus die zweite elektronische Recheneinrichtung 28 zugeschaltet und sofort zum primären Steuerungskreis. Der zugehörige externe zweite Datensensor 38 wird sofort zum primären externen Datensensor. Die entsprechenden Funktionen für die Sicherheitseinrichtung 14 sind weiterhin verfügbar.

Wenn die erste elektronische Recheneinrichtung 18 mit der ersten Steuerungsfunktion 24 und dem externen zweiten Datensensor 38 ausfällt, dann läuft weiterhin noch die zweite elektronische Recheneinrichtung 28 mit der zweiten Steuerungsfunktion 34, die sofort zur primären Kontrollinstanz wird. Die entsprechenden Notfallinstanzen für die Sicherheitseinrichtung 14 sind weiterhin verfügbar.

Fällt einer der externen Datensensoren 38, 40 aus, gibt es immer noch die gleichrangigen externen Datensensoren 38, 40, die entweder der primäre ist, beispielsweise der externe zweite Datensensor 40 beim Ausfall des externen ersten Datensensors 38 oder umgekehrt, wobei sofort der noch verfügbare zum primären Datensensor wird.

Wenn alle redundanten Verbindungen für die Steuersignale 20, 30 oder eine der redundanten Notverbindungen ausfällt, funktioniert die entsprechende Gegenverbindung noch. Diese Ausfälle können wie Ausfälle der Prozesse, beispielsweise Steuerungsfunktionsinstanzen oder externe Datensensoren 38, 40, behandelt werden, die diese Verbindungen kontrollieren.

Fällt eine der Sensordatenverbindungen aus, erreichen die Sensordaten ihr Ziel über eine redundante Kommunikationsverbindung. Alternativ können die Sensordaten über eine andere Kommunikationsverbindung umgeleitet werden, vorausgesetzt, die für die Sensordatenkommunikation gesperrten Kommunikationsressourcen sowie die Datenlaufzeit sind ausreichend.

Sollte beispielsweise der interne erste Datensensor 22 ein fatales Programm auf der ersten Steuerungsfunktion 24 feststellen, kann der interne erste Datensensor 22 einen entsprechenden Notstopp initiieren. Wenn der externe erste Datensensor 40 ein fatales Programm in der ersten Steuerungsfunktion 24 feststellt, das aus globaler Sicht betrachtet untragbar ist, zum Beispiel unter Berücksichtigung des Zustands von der zweiten Steuerungsfunktion 24, der Betriebsbedingungen und der Gesundheit der entsprechenden elektronischen Recheneinrichtung 28, so kann der externe zweite Datensensor 40 eine Notfunktion auslösen.

Primäre Instanzen reagieren vor sekundären Instanzen und interne Datensensoren 22, 32 können vor externen Datensensoren 38, 40 reagieren.

Nach einem kritischen Ausfall läuft die entsprechende Steuerungsfunktion für einen bestimmten Zeitraum im degradierten Betriebsmodus. Eine sicherheitsrelevante Steuerungsfunktion im degradierten Modus sollte nicht aufgerüstet oder heruntergestuft werden.

Die externen Datensensoren 38, 40 und die internen Datensensoren 22, 32 führen ein oder mehrere Testprogramme aus und verwenden dabei die Betriebsmittel, die ausschließlich für Datentestoperationen verfügbar und gesperrt sind. Ein Prüfprogramm ist dabei wiederum ein Testprogramm, welches auch als Testplan bezeichnet werden kann, das statisch vor der Ausführung des Steuerungssystems, oder dynamisch während der Laufzeit des Steuerungssystems, verknüpft werden kann. Prüfprogramme arbeiten an Prüfpunkten auf der Anwendungsebene und/oder auf der Systemebene, um wichtige Steuerungsfunktionen zu prüfen und zu vergleichen und um Leistungsindikatoren, beispielsweise den Gesundheitszustand, zu ermitteln.

Insbesondere ist in einer Ausführungsform gemäß der Erfindung vorgesehen, dass eine Funktionstüchtigkeit der Schaltungsanordnung 16 für die Steuerung der Maschine 12 durchgeführt wird. Dabei wird die erste elektronische Recheneinrichtung 18 zum Erzeugen des ersten Steuersignals 20 für die Maschine 12 bereitgestellt, wobei die erste elektronische Recheneinrichtung zumindest einen ersten Datensensor 22, 38 aufweist. Vorliegend, wie bereits beschrieben, weist die erste elektronische Recheneinrichtung 18 zumindest den internen ersten Datensensor 22 sowie den externen zweiten Datensensor 38 auf. Ferner wird die zweite elektronische Recheneinrichtung 28 zum Erzeugen des zweiten Steuersignals 30 bereitgestellt, wobei die zweite elektronische Recheneinrichtung 28 zumindest einen zweiten Datensensor 32, 40 vorliegend insbesondere den internen zweiten Datensensor 32 sowie den externen ersten Datensensor 40, aufweist. Es ist vorgesehen, dass ein zweites Aufforderung-Antwort-Verfahren 54 für die erste elektronische Recheneinrichtung 18 mittels des zweiten Datensensors 32, 40, vorliegend insbesondere mittels des externen ersten Datensensors 40 und/oder ein erstes Aufforderung-Antwort-Verfahren 56 für die zweite elektronische Recheneinrichtung 28 mittels des ersten Datensensors 22, 38, vorliegend insbesondere mittels des externen zweiten Datensensors 38, durchgeführt wird. Es wird dann die Funktionstüchtigkeit in Abhängigkeit von der Auswertung überprüft.

Insbesondere kann dabei vorgesehen sein, dass bei der Auswertung eine Korrektheit eines Ergebnisses des Aufforderung-Antwort-Verfahrens 54, 56 überprüft wird. Ferner kann bei der Auswertung eine Zeitdauer für eine Auswertung des Aufforderung-Antwort-Verfahrens 54, 56 überprüft werden. Des Weiteren kann vorgesehen sein, dass ein Aufforderung-Antwort-Verfahren 54, 56 aus einer Vielzahl von potentiellen Aufforderung-Antwort-Verfahren 54, 56 ausgewählt wird.

Des Weiteren kann vorgesehen sein, dass in Abhängigkeit von einem Ergebnis der Auswertung die Sicherheitseinrichtung 14 der Schaltungsanordnung 16 angesteuert wird. Des Weiteren kann in Abhängigkeit von einem Ergebnis der Auswertung ein erneutes Aufforderung-Antwort-Verfahren 54, 56 durchgeführt werden. Ebenfalls kann vorgesehen sein, dass in vorgegebenen Zeitabständen ein Aufforderung-Antwort-Verfahren 54, 56 durchgeführt wird.

Insbesondere kann auf Basis des Aufforderung-Antwort-Verfahrens 54, 56, welche auch als Challenge-Response-Mechanismus bezeichnet werden kann, die Integrität der sicherheitsrelevanten Steuerungsfunktionen 24, 34 bestimmt werden. Insbesondere kann somit eine kontinuierliche Sicherung der Integrität der redundant ausgelegten Steuerungsfunktionen 24, 34 realisiert werden, inklusive der entsprechenden Ausführungsumgebung, mit anderen Worten der Schaltungsanordnung 16. Hierbei können auch die Betriebsmittel, insbesondere die sogenannten Ressourcen, verwaltet werden, die für die korrekte und rechtzeitige Ausführung der sicherheitsrelevanten Funktionen notwendig sind. Im Speziellen umfasst das auch die redundant ausgelegte Schaltungsanordnung 16 aus den externen Datensensoren 38, 40 und den internen Datensensoren 22, 32.

Als ein Beispiel kann angesehen werden, dass der erste externe Datensensor 40 eine geeignete, parametrierte Challenge-Response aus einer Menge von Challenge-Responses auswählt, mit dem Ziel zu überprüfen, ob der interne erste Datensensor 22, die erste Steuerungsfunktion 24 sowie der externe zweite Datensensor 38 ihre jeweiligen Aufgaben noch korrekt erfüllen. Der externe erste Datensensor 40 versorgt die ausgewählte, parametrierte Challenge-Response mit Argumenten, die nur auf der zweiten elektronischen Recheneinrichtung 18 vorliegen. Dies können beispielsweise Daten zur zweiten Steuerungsfunktion 34, dem zweiten internen Datensensor 32 sowie dem externen ersten Datensensor 40 sein. Ferner kann ein Zustand der zweiten elektronischen Recheneinrichtung 28 zu einer definierten Zeit T übermittelt werden. Ferner werden insbesondere Argumente bereitgestellt, die nur auf der ersten elektronischen Recheneinrichtung 18 vorliegen. Beispielsweise können entsprechende Daten, wie etwa die Daten von der ersten Steuerungsfunktion 24 und vom ersten internen Datensensor 22 übermittelt werden. Die an der Challenge-Response beteiligten Komponenten müssen die im Rahmen der Challenge-Response gestellten Aufgaben korrekt und rechtzeitig lösen, zum Beispiel soll der erste interne Datensensor 22 bestimmte Daten von der ersten Steuerungsfunktion 24 ermitteln und Fehler einspielen, im Speziellen Testvariablen, diese Fehler erkennen und danach an den externen zweiten Datensensor 38 senden, wo der Fehler sich offenbaren muss.

Die ausgewählte Challenge-Response wird auf beiden elektronischen Recheneinrichtungen 18, 28 separat berechnet. Auf der zweiten elektronischen Recheneinrichtung 28 berechnet der externe erste Datensensor 40 das Ergebnis, nachdem der interne erste Datensensor 22 und der externe zweite Datensensor 38 die benötigten Daten übertragen haben. Auf der ersten elektronischen Dateneinrichtung 18 berechnet der externe zweite Datensensor 38 bereits das Ergebnis, nachdem der interne zweite Datensensor 32 und der externe erste Datensensor 40 die benötigten Daten übertragen haben. Der externe erste Datensensor 40 und der externe zweite Datensensor 38, die ebenso Datensensoren sind wie die internen Datensensoren 22, 32, berechnen eigene Aufgaben als Teile der Challenge-Response.

Die externen Datensensoren 38, 40 tauschen die unabhängig voneinander berechneten Ergebnisse für die Aufgaben der ausgewählten Challenge-Response über die Kommunikationsverbindung 42 aus und prüfen, ob die Challenge-Response bestanden wurde.

Abhängig von der Auslegung der sicherheitsrelevanten Funktion als, zum Beispiel fail-stop, unter Berücksichtigung einer bedingten Fehlertoleranz von 0 bis M Systemtakten, und abhängig von der Strategie zur Behandlung von Fehlern, löst die Schaltungsanordnung 16, der Inkonsistenzen feststellt, den Not-Aus-Schalter aus, insbesondere steuert die Sicherheitseinrichtung 14 an, oder wählt eine weitere Challenge-Response aus und lässt diese berechnen.

Durch dieses Vorgehen wird die Integrität der elektronischen Recheneinrichtungen 18, 28 inklusive Betriebsmittelverwaltung und der darauf laufenden Instanzen der Funktion gegenüber zufälligen Fehlern der Hardware wirksam abgesichert.

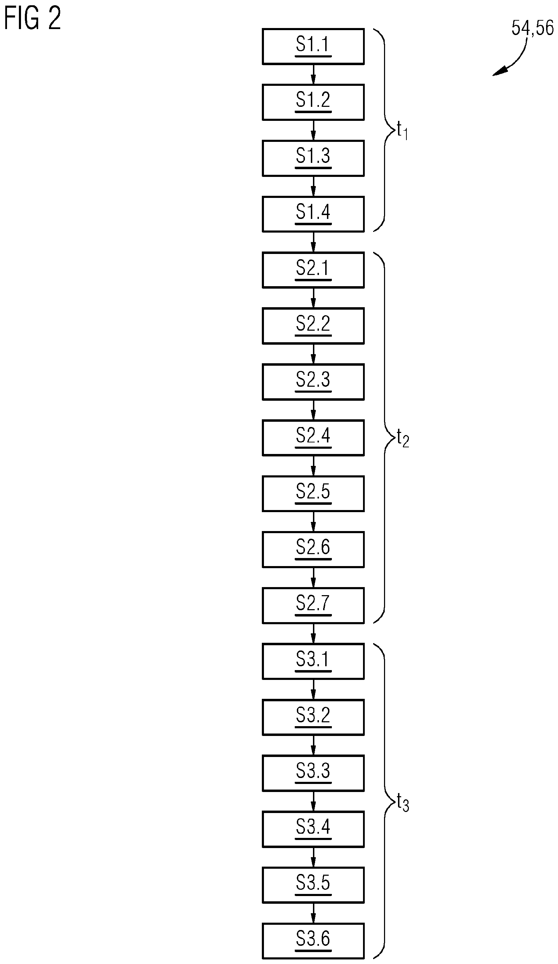

FIG 2 zeigt ein schematisches Ablaufdiagramm gemäß einer Ausführungsform des Verfahrens. Insbesondere zeigt die FIG 2 einen Ablauf eines Aufforderung-Antwort-Verfahrens 54, 56.

Dabei werden insbesondere Daten in speziell gekapselten Variablen, insbesondere sogenannte Untersuchungspunkte, die die externen Datensensoren 38, 40 und die internen Datensensoren 22, 32 beobachten können, gegebenenfalls manipulieren können, wie folgt bezeichnet:
- DCF1, DCF2 = Daten der Instanzen CF1 und CF2 der Funktion CF
- Ddp1, Ddp2 = Daten über Zustände von dp1 bzw. dp2
- DDP1, DDP2 = Daten über Zustände von DP1 bzw. DP2
- DCN1, DCN2 = Daten über die Plattform (Betriebsmittelverwaltung) auf CN1 bzw. CN2
- DD1 = Datentupel aus DCF1, Ddp1, DDP2, DCN1 ermittelt auf CN1
- DD2 = Datentupel aus DCF2, Ddp2, DDP1, DCN2 ermittelt auf CN2
- CR1, CR2 = Eigenständige, unabhängige CR-Berechnungen auf DP1 bzw. DP2
- CR1,result, CR2,result = Teilergebnisse der CR berechnet von DP1 bzw. DP2
- CRresult = Endergebnis der CR

Die entsprechenden Untersuchungspunkte können in den Datensensoren 22, 32, 38, 40 liegen, um sich mit selbst zu überwachen.

Die Unterschungspunkte Ddp1, Ddp2, DDP1, DDP2 können in den Datensensoren 22, 32, 38, 40 liegen, um sich damit selbst zu überwachen.

Mit UP(T) werden Daten in einem Untersuchungspunkt UP zum Zeitpunkt (Systemtakt) T bezeichnet, z. B. bezeichnen DCF1(t1) und DCF1(t2) Daten in der ersten Steuerungsfunktion 24 zu unterschiedlichen Zeitpunkten t1 und t2, und DDP1(t1) bezeichnen Daten im externen zweiten Datensensor 38 zum Zeitpunkt 11.

Im Folgenden, speziell auch im nachfolgend skizzierten Algotithmus, gilt für die Zeitpunkte t1 < t2 < t3, also t2 = t1 + i und t3 = t2 + j, wobei die Differenzen i und j größer 0 und minimal gewählt werden sollte, weil Fehler in der Plattform so schnell wie möglich zu offenbaren sind. Die Inkremente i und j können um so größer ausfallen, je komplexer das System ist.

| ***t₁*** | Inst | Schritt 1 | |
|---|---|---|---|
| 1.1 | DP₁ | wählt eine CR(t₂, DD₂, DD₁) aus einer Menge von CR aus und parametriert diese. | |
| | | | · t₂ = t₁ + i |
| | | | · DD₂ = D_{CF2}(t₁), D_{dp2}(t₁), D_{CP1}(t₁), D_{CN2}(t₁), das sind Baseline-Daten in Untersuchungspunkten auf CN₂ zum Zeitpunkt t₁ |
| | | | · DD₁ = D_{CF1}, D_{dp1}, D_{DP2}, D_{CN1}, das sind Untersuchungspunkte auf CN₁, deren Daten zum Zeitpunkt t₂ ermittelt werden sollen |
| 1.2 | DP₁ | speichert DD₂ für CR₁ und für Vergleich der Ergebnisse von DP₁ und DP₂ in Schritt 3 | |
| 1.3 | DP₁ | übermittelt D_{DP1}(t₁), D_{CN2}(t₁) und die auszuführende CR an DP₂ | |
| 1.4 | dp₂ | übermittelt D_{CF2}(t₁) und D_{dp2}(t₁) an DP₂ | |

| ***t₂*** | | Schritt2 | |
|---|---|---|---|
| 2.1 | DP₂ | erhält von DP₁ die CR inklusive der von CN₂ benötigten Vergleichsdaten und den Daten, die auf CN₁ zum Zeitpunkt t₂ zu ermitteln sind | |
| 2.2 | DP₂ | ermittelt mit Hilfe von dp₁ in DD₁ spezifizierte Daten, i. e. , D_{CF1}(t₂), D_{dp1}(t₂) | |
| 2.3 | DP₂ | ermittelt selbständig weitere in DD₁ spezifizierte Daten, i. e., D_{DP2}(t₂), D_{CN1}(t₂) | |
| 2.4 | DP₂ | berechnet CR₂ mit DD₂ und DD₁ und erhält das Ergebnis CR₂, result | |
| 2.5 | DP₂ | übermittelt CR_{2,result} und die ermittelten Daten D_{DP2}(t₂), D_{CN1}(t₂) an DP₁ | |
| 2.6 | DP₁ | ermittelt D_{CF2}(t₂) zum Vergleich mit D_{CF1}(t₂) im Schritt 3 | |
| 2.7 | dp₁ | übermittelt D_{CF1}(t₂) und D_{dp1}(t₂) an DP₁ | |

| ***t₃*** | | Schritt 3 | |
|---|---|---|---|
| 3.1 | DP₁ | erhält von DP₂ das CR_{2,result} sowie D_{DP2}(t₂) und D_{CN1}(t₂) | |
| 3.2 | DP₁ | erhält von dp₁ D_{CF1}(t₂) und D_{dp1}(t₂) | |
| 3.3 | DP₁ | berechnet CR₁ mit DD₂ und DD₁ und erhält das Ergebnis CR_{1, result} | |
| 3.4 | DP₁ | vergleicht CR_{1,result} und CR_{2,result} | |
| 3.5 | DP₁ | vergleicht D_{CF1}(t₂) und D_{dp2}(t₂) zur Sicherung der Integrität von CF₁ und CF₂ | |
| 3.6 | DP₁ | bestimmt das Endergebnis CRᵣₑₛᵤₗₜ | |

Mit DP₁ als externer zweiter Datensensor 38, DP₂ als externer erster Datensensor 40, dp₁ als interner erster Datensensor 22, dp₂ als interner zweiter Datensensor 32, CF₁ als erste Steuerungsfunktion 24 und CF₂ als zweite Steuerungsfunktion 34.

Die Challenge-Response offenbart dabei potentielle Fehler im zeitgesteuerten Maschinensystem 10 umso schneller, je geringer die Differenzen i und j zwischen den Zeitpunkten t1, t2 und t3 sind. Zwei Maßnahmen zur Beschränkung von i und j sind beispielsweise, dass wenn die möglichen Untersuchungspunkte einer Challenge-Response beim Start des Systems festgelegt sind und sich während des Systemlaufs nicht ändern, dann können Teile der Schaltungsanordnung 16 deren aktuellen Daten mit jedem Systemtakt übermitteln. Diese Erhöhung der Grundlast im Netzwerk erspart die Zeit, die notwendig ist für Datenübermittlungen auf Anfrage einer Challenge-Response.

Ein positiver Nebeneffekt ist dabei, dass diese Daten auch in anderen Tests einfließen können. Ferner können die externen Datensensoren 38, 40 die Untersuchungspunkte automatisch eine Datenhistorie führen, soweit das nötig ist für die Challenge-Response. Dadurch werden die Untersuchungspunkte im Grunde zu Untersuchungslinien, die nicht nur Zeitpunkte betreffen, sondern Zeitspannen umfassen. Das ermöglicht einer Challenge-Response historische Datenanalyse, ohne speziell, zeitaufwändige Vorkehrungen für diesen Zweck zu treffen.

Diese Maßnahmen vereinfachen auch die Kommunikation und die Implementierung einer Challenge-Response und reduzieren damit auch die Anfälligkeit der Fehler in der Schaltungsanordnung 16.

Die Schritte S2 und S3 können erweitert werden, sodass der externe zweite Datensensor 40, 38 spiegelbildlich und parallel zum externen ersten Datensensor 38, 40 die gleichen Schritte durchführt. Der externe zweite Datensensor 38 muss bei einem letzten Schritt zum gleichen Endergebnis kommen wie der externe erste Datensensor 40.

Ein korrektes Endergebnis sichert mögliche Fehler in der Challenge-Response-Berechnung der beteiligten Komponenten und Datenbereiche und der durch diese Komponenten implementierten Systemfunktionalitäten ab. Dies betrifft insbesondere die folgenden Funktionalitäten. Beispielsweise betrifft dies den Datenaustausch zwischen den externen Datensensoren 38, 40 über die Kommunikationsverbindung 42. Ferner betrifft dies die internen Datensensoren 22, 32, wobei überprüft werden kann, ob diese auf die internen Daten der Steuerungsfunktionen 24, 34 korrekt zugreifen können und ob die Datensonden interne Datensensoren 22, 32 die Daten übermitteln können und diese Daten auch korrekt an die externen Datensensoren 38, 40 auf der gleichen elektronischen Recheneinrichtung 18, 28 und auf der anderen elektronischen Recheneinrichtung 18, 28 übermitteln können.

Des Weiteren können die Zustände der Instanzen der Steuerungsfunktion auf Synchronität überprüft werden. Das stellt Vergleiche zwischen den jeweiligen Daten fest. Teil dieser Vergleiche können elementare oder komplexe Untersuchungspunkte sein, oder auch, zum Beispiel Prüfsummen über wichtige interne Zustände. Ferner betrifft dies auch die Berechnungen der Instanzen der Steuerungsfunktionen 24, 34, ob diese korrekt sind. Dise stellen die Vergleiche über Zeitspannen hinweg fest, zum Beispiel von den entsprechenden Daten.

Alle in der Challenge-Response beteiligten Komponenten haben eine zeitliche Erwartungshaltung, wann eine Challenge-Response gestellt wird und das Ergebnis einer Challenge-Response berechnet sein muss. Wenn eine Challenge-Response ausbleibt oder wenn eine Challenge-Response nicht rechtzeitig korrekt berechnet wird, dann löst die Schaltungsanordnung 16 eine sichere Reaktion aus.

Es ist ferner sicherzustellen, dass die Challenge-Response und die Daten einer Challenge-Response geeignet gewählt sind, zum Beispiel Zeitpunkte der Datenermittlung, um zum Beispiel stuck-at-Fehler sicher zu erkennen. Zum Beispiel wenn sich von einem Systemzyklus t1 zum nächsten Systemzyklus t2 der Wert ändern muss, den die Steuerungsfunktion 24 an die Maschine 12 senden soll, dann ist ein Ergebnis, dass der gleiche Wert ausgegeben wird, ein Hinweis auf einen stuck-at-Fehler. Es ist zu prüfen, ob eine Challenge-Response zu wiederholen oder zu wechseln ist und ob Challenge-Response-Argumente zu wiederholen oder zu wechseln sind. Abhängig vom System und der Situation können sowohl Wiederholungen als auch Wechsel eine höhere Systemsicherheit erreichen und durch höhere Abdeckung der Systemfunktionalität, die die beteiligten Komponenten implementieren.

## Patentansprüche

1. Verfahren zum Überprüfen einer Funktionstüchtigkeit einer Schaltungsanordnung (16) für eine Steuerung einer Maschine (12) mittels der Schaltungsanordnung (16), mit den Schritten:
- Bereitstellen einer ersten elektronischen Recheneinrichtung (18) der Schaltungsanordnung (16) zum Erzeugen eines ersten Steuersignals (20) für die Maschine (12), wobei die erste elektronische Recheneinrichtung (18) zumindest einen ersten internen und einen zweiten externen Datensensor (22, 40) aufweist;
- Bereitstellen einer zweiten elektronischen Recheneinrichtung (28) der Schaltungsanordnung (16) zum Erzeugen eines zweiten Steuersignals (30) für die Maschine (12), wobei die zweite elektronische Recheneinrichtung (28) zumindest einen zweiten internen und einen ersten externen Datensensor (32, 38) aufweist;
- Erzeugen eines zweiten Aufforderung-Antwort-Verfahrens (54) für die erste elektronische Recheneinrichtung (18) mittels eines der Datensensoren (22, 32, 38, 40) und/oder eines ersten Aufforderung-Antwort-Verfahrens (56) für die zweite elektronische Recheneinrichtung (18) mittels eines der Datensensoren (22, 32, 38 40);
- Auswerten des zweiten Aufforderung-Antwort-Verfahrens (54) mittels eines der Datensensoren (22, 32, 38, 40) und/oder Auswerten des ersten Aufforderung-Antwort-Verfahrens (56) mittels eines der Datensensoren (22, 32, 38, 40); und
- Überprüfen der Funktionstüchtigkeit in Abhängigkeit von der Auswertung.

2. Verfahren nach Anspruch 1, **dadurch gekennzeichnet, dass** ein jeweiliger Datensensor (22, 32, 38, 40) zum Überwachen von zumindest einem anderen der Datensensoren (22, 32, 38, 40) mittels eines Aufforderung-Antwort-Verfahrens (54, 56) bereitgestellt wird.

3. Verfahren nach Anspruch 2, **dadurch gekennzeichnet, dass** die jeweiligen Datensensoren (22, 32, 38, 40) unabhängig voneinander eine Überwachung durchführen.

4. Verfahren nach einem der vorhergehenden Ansprüche, **dadurch gekennzeichnet, dass**
bei der Auswertung eine Korrektheit eines Ergebnisse des Aufforderung-Antwort-Verfahrens (54, 56) überprüft wird.

5. Verfahren nach einem der vorhergehenden Ansprüche, **dadurch gekennzeichnet, dass**
bei der Auswertung eine Zeitdauer für eine Auswertung des Aufforderung-Antwort-Verfahrens (54, 56) überprüft wird.

6. Verfahren nach einem der vorhergehenden Ansprüche, **dadurch gekennzeichnet, dass**
ein Aufforderung-Antwort-Verfahren (54, 56) aus einer Vielzahl von potentiellen Aufforderung-Antwort-Verfahren (54, 56) ausgewählt wird.

7. Verfahren nach einem der vorhergehenden Ansprüche, **dadurch gekennzeichnet, dass**
in Abhängigkeit von einem Ergebnis der Auswertung eine Sicherheitseinrichtung (14) der Schaltungsanordnung (16) angesteuert wird.

8. Verfahren nach einem der vorhergehenden Ansprüche, **dadurch gekennzeichnet, dass**
in Abhängigkeit von einem Ergebnis der Auswertung ein erneutes Aufforderung-Antwort-Verfahren (54, 56) durchgeführt wird.

9. Verfahren nach einem der vorhergehenden Ansprüche, **dadurch gekennzeichnet, dass**
in vorgegebenen Zeitabständen ein Aufforderung-Antwort-Verfahren (54, 56) durchgeführt wird.

10. Verfahren nach einem der vorhergehenden Ansprüche, **dadurch gekennzeichnet, dass**
die erste elektronische Recheneinrichtung (18) als primäre Steuerungseinrichtung für die Maschine (12) bereitgestellt wird.

11. Verfahren nach einem der vorhergehenden Ansprüche, **dadurch gekennzeichnet, dass**
eine Notsteuerung für die Maschine (12) mittels einer der Datensensoren (22, 32, 38, 40) in Abhängigkeit von einem Ereignis durchgeführt wird.

12. Verfahren nach einem der vorhergehenden Ansprüche, **dadurch gekennzeichnet, dass**
eine Kommunikation zwischen zumindest dem ersten Datensensor (22, 38) und dem zweiten Datensensor (32, 40) mittels einer Kommunikationsverbindung durchgeführt wird.

13. Computerprogrammprodukt mit Programmcodemitteln, welche zumindest eine elektronische Recheneinrichtung (18, 28) dazu veranlassen, wenn die Programmcodemittel von der zumindest einen elektronischen Recheneinrichtung (18, 28) abgearbeitet werden, ein Verfahren nach einem der Ansprüche 1 bis 12 durchzuführen.

14. Computerlesbares Speichermedium mit einem Computerprogrammprodukt nach Anspruch 13.

15. Schaltungsanordnung (16) zum Überprüfen einer Funktionstüchtigkeit der Schaltungsanordnung (16) und für eine Steuerung einer Maschine (12), mit zumindest einer ersten elektronischen Recheneinrichtung (18) und einer zweiten elektronischen Recheneinrichtung (28), wobei die Schaltungsanordnung (16) zum Durchführen eines Verfahrens nach einem der Ansprüche 1 bis 12 ausgebildet ist.
